# EUROPEAN PATENT SPECIFICATION

(11) **EP 2 992 941 B1**
(45) Date of publication and mention of the grant of the patent: **22.01.2020**
(21) Application number: 15183333.2
(22) Date of filing: 01.09.2015
(51) Int. Cl.: B01D 35/02, B01D 35/147, B01D 27/10, B01D 29/70

(54) **FLUID INLET SCREEN BEING MOVEABLE TO BYPASS POSITION**
FLUIDEINLASSSIEB, WELCHES IN EINE UMGEHUNGSPOSITION BEWEGBAR IST
ÉCRAN D'ENTRÉE DE FLUIDE MOBILE VERS UNE POSITION DE DÉRIVATION

(30) Priority: 03.09.2014 US 201414475850
(43) Date of publication of application: 09.03.2016
(73) Proprietor: Hamilton Sundstrand Corporation, Charlotte, NC 28217 (US)
(72) Inventor: PLICKYS, Mark R., Unionville, CT 06085 (US)
(74) Representative: Dehns

(56) References cited:
- EP-A1- 2 377 593
- DE-A1-102007 062 223
- US-A1- 2002 074 273
- US-B1- 6 423 215

## Description

### BACKGROUND OF THE INVENTION

This application relates to a fluid filter that is moveable to a bypass position under certain conditions.

Hydraulic systems are known and, typically, include a hydraulic supply supplying a fluid to a pump. The pump moves the hydraulic fluid for various uses. It is known to provide a filter associated with an inlet to the pump to remove metal debris, etc. from the hydraulic fluid before it reaches the pump.

Known filters for use in hydraulic systems have typically included a fixed filter element. Under certain conditions, the filter can result in a very high pressure drop that can be detrimental to a pump.

DE 10 2007 062223 A1 shows a filter assembly with a filter element having a spring which presses the filter against a surface functioning as a bypass valve.

### SUMMARY OF THE INVENTION

A fluid filter assembly comprises an outer housing, a filter element including a face, and a filter portion extending from the face. The housing has an inlet and an outlet. A spring biases the face against a housing structure at the inlet. A pressure drop across the filter assembly biases the filter element against the spring force such that if the pressure drop exceeds the spring force, the filter element can move to a bypass position. A hydraulic system is also disclosed.

These and other features may be best understood from the following drawings and specification.

### BRIEF DESCRIPTION OF THE DRAWINGS

Figure 1 shows a filter element in a standard position.
Figure 2 shows a filter element having moved to a bypass position.
Figure 3 is a cross-sectional view along line 3-3 of Figure 1.

### DETAILED DESCRIPTION

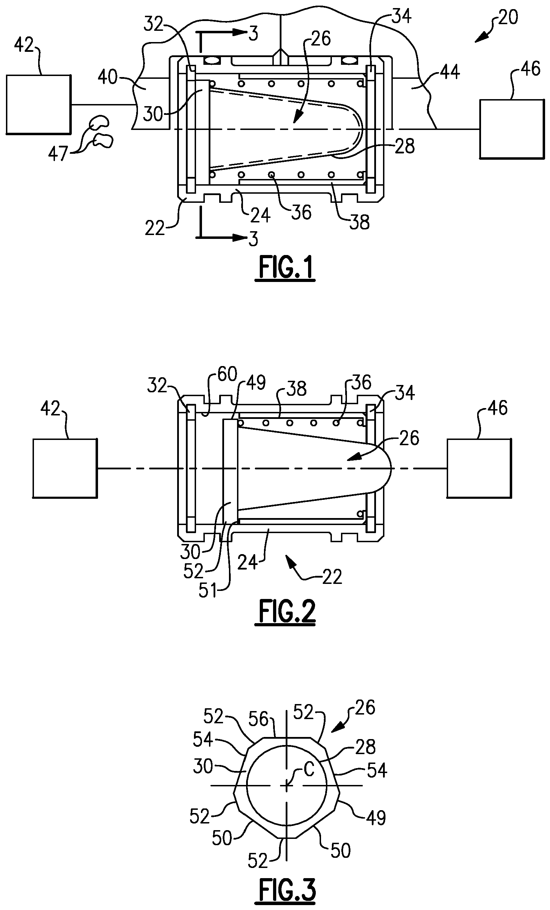

A hydraulic system 20 is illustrated in Figure 1. A filter assembly 22 includes an outer housing 24. A filter element 26 is received within housing 24 and has a frusto-conical forward filter portion 28 and a rear face 30. Retainer rings 32 and 34 retain the filter element 26 and a spring 36 within the housing 24. A spring retainer 38 further serves to properly position the spring 36. As shown, the spring 36 acts against the face 30 and biases the filter element 22 against the ring 32.

In the position shown in Figure 1, the filter element 26 is in the path of fluid flowing from a tube 40 to a tube 44. The tube 40 receives hydraulic fluid from a source 42 and the tube 44 communicates with a pump 46.

As shown, particles 47 may be in this fluid flow, and in the Figure 1 position the fluid all flows through the filter element 26. Thus, the particles 47 will be prevented from reaching the pump 46.

While a pump 46 is disclosed, any number of other components may also benefit from such a filter. As an example, contamination sensitive devices such as orifices, close tolerance vales, etc., will benefit from the filter element. The filter element may be part of a component known as a "jumper tube" or "transfer tube" and serves to connect two components within a hydraulic system.

The force from spring 36 is sufficient to hold the filter element 26 in this position during most operational conditions.

However, under cold conditions and, in particular, at startup, the pressure drop imposed across filter assembly 22 may be high and may be detrimental to the operation of pump 46.

Thus, as shown in Figure 2, under those conditions, the pressure on the face 30 may be sufficient to move the filter 26 against the force of the spring 36 and allow the fluid to flow around the outer periphery 49 of the face 30.

As shown in Figure 2, an end 51 of the spring guide or retainer 38 provides a stop that is abutted by the face 30 in this position. Particles may move around the outer periphery 49, however, the time the filter spends in this position is limited.

Once the fluid heats, the pressure will drop and the spring 36 will again move the filter 26 back to the Figure 1 position.

As shown in Figure 3, the outer periphery 49 of the face 30 includes a plurality of flats 50, 52, 54 and 56. These flats allow the spring to pivot somewhat while moving and further provide flow passages for allowing the flow when the filter 26 is in the Figure 2 position.

Portions 52 of the flats are formed further outwardly from a center point C than are portions 56, 54, and 50. The portions 56, 54 and 50 form fluid passages while the portions 52 generally form pivot points for guiding the spring element 26 during movement. As an example, and as shown in Figure 2, a pivot point 52 is in contact with an inner surface 60 of the outer housing 24. While the outer periphery 49 is shown to have a particular set of flats, in embodiments, the ability to bypass flow may be achievable by other non-cylindrical shapes.

## Claims

1. A fluid filter assembly (22) comprising:
an outer housing (24), a filter element (26) including a face (30), and a filter portion (28) extending from the face (30), the housing (24) having an inlet and an outlet, and a spring (36) biasing said face (30) against a housing portion (32) at said inlet;
a pressure drop across said filter assembly (22) biasing said filter element (26) against a force of said spring (36) such that if the pressure drop exceeds the spring force, the filter element (26) can move to a bypass position; **characterized in that** said face (30) has a non-cylindrical outer periphery; and wherein said non-cylindrical shape includes a plurality of flats (50, 52, 54, 56).

2. The fluid filter assembly as set forth in claim 1, wherein a retainer ring (32) provides said housing portion.

3. The fluid filter assembly as set forth in claim 1 or 2, wherein said filter portion (28) has a generally frusto-conical shape.

4. The fluid filter assembly as set forth in claim 1, wherein said plurality of flats (50, 52, 54, 56) include a first group of flats (52) spaced further from a center (C) of said filter element (26), and providing pivot points within said outer housing (24), and a second set of flats (50, 54, 56) spaced closer to said center (C) of said filter element (26) to provide flow passages when said filter element (26) is in said bypass position.

5. The fluid filter assembly as set forth in any preceding claim, wherein a spring retainer (38) is positioned between said spring (36) and said outer housing (24), and said spring retainer (38) providing a stop for said filter element (26) when it is in said bypass position.

6. A hydraulic system comprising:
the fluid filter assembly (22) as set forth in any preceding claim, a source (42) of hydraulic fluid communicating into an inlet of the filter assembly (22), and a component (46) connected to an outlet of said fluid filter assembly (22).

7. The hydraulic system as set forth in claim 6, wherein said component is a pump (46).

## Patentansprüche

1. Fluidfilteranordnung (22), umfassend:
ein Außengehäuse (24), ein Filterelement (26), das eine Fläche (30) beinhaltet, und einen Filterabschnitt (28), der sich von der Fläche (30) erstreckt, wobei das Gehäuse (24) einen Einlass und einen Auslass aufweist, und eine Feder (36), die die Fläche (30) an dem Einlass gegen einen Gehäuseabschnitt (32) vorspannt;
wobei ein Druckabfall durch die Filteranordnung (22) das Filterelement (26) gegen eine Kraft der Feder (36) vorspannt, sodass sich das Filterelement (26), wenn der Druckabfall die Federkraft übersteigt, in eine Umgehungsposition bewegen kann;
**dadurch gekennzeichnet, dass** die Fläche (30) einen nichtzylindrischen Außenumfang aufweist; und wobei die nichtzylindrische Form eine Vielzahl von Flachstellen (50, 52, 54, 56) beinhaltet.

2. Fluidfilteranordnung nach Anspruch 1, wobei ein Haltering (32) den Gehäuseabschnitt bereitstellt.

3. Fluidfilteranordnung nach Anspruch 1 oder 2, wobei der Filterabschnitt (28) eine im Allgemeinen frustokonische Form aufweist.

4. Fluidfilteranordnung nach Anspruch 1, wobei die Vielzahl von Flachstellen (50, 52, 54, 56) eine erste Gruppe an Flachstellen (52), die weiter von einer Mitte (C) des Filterelements (26) beabstandet ist und Schwenkpunkte innerhalb des Außengehäuses (24) bereitstellt, und einen zweiten Satz an Flachstellen (50, 54, 56) beinhaltet, der näher zu der Mitte (C) des Filterelements (26) beabstandet ist, um Durchflusskanäle bereitzustellen, wenn sich das Filterelement (26) in der Umgehungsposition befindet.

5. Fluidfilteranordnung nach einem vorhergehenden Anspruch, wobei ein Federhalter (38) zwischen der Feder (36) und dem Außengehäuse (24) positioniert ist und der Federhalter (38) einen Anschlag für das Filterelement (26) bereitstellt, wenn es sich in der Umgehungsposition befindet.

6. Hydrauliksystem, umfassend:
die Fluidfilteranordnung (22) nach einem vorhergehenden Anspruch, eine Quelle (42) an Hydraulikfluid, die in einen Einlass der Filteranordnung (22) transportiert wird, und eine Komponente (46), die mit einem Auslass der Fluidfilteranordnung (22) verbunden ist.

7. Hydrauliksystem nach Anspruch 6, wobei die Komponente eine Pumpe (46) ist.

## Revendications

1. Ensemble filtre de fluide (22) comprenant :
un boîtier extérieur (24), un élément de filtre (26) comprenant une face (30), et une partie de filtre (28) s'étendant depuis la face (30), le boîtier (24) ayant une entrée et une sortie, et un ressort (36) sollicitant ladite face (30) contre une partie de boîtier (32) au niveau de ladite entrée ;
une chute de pression à travers ledit ensemble filtre (22) sollicitant ledit élément de filtre (26) contre une force dudit ressort (36) de sorte que si la chute de pression dépasse la force du ressort, l'élément de filtre (26) peut se déplacer vers une position de dérivation ; **caractérisé en ce que** ladite face (30) comporte une périphérie extérieure non cylindrique ; et dans lequel ladite forme non cylindrique comprend une pluralité de plats (50, 52, 54, 56).

2. Ensemble filtre de fluide selon la revendication 1, dans lequel un anneau de retenue (32) fournit ladite partie de boîtier.

3. Ensemble filtre de fluide selon la revendication 1 ou 2, dans lequel ladite partie de filtre (28) présente une forme généralement frusto-conique.

4. Ensemble filtre de fluide selon la revendication 1, dans lequel ladite pluralité de plats (50, 52, 54, 56) comprend un premier groupe de plats (52) espacés plus loin par rapport à un centre (C) dudit élément de filtre (26), et fournissant des points de pivot à l'intérieur dudit boîtier (24) et un second ensemble de plats (50, 54, 56) espacés plus près par rapport audit centre (C) dudit élément de filtre (26) pour fournir des passages d'écoulement lorsque ledit élément de filtre (26) se trouve dans ladite position de dérivation.

5. Ensemble filtre de fluide selon une quelconque revendication précédente, dans lequel une coupelle d'appui de ressort (38) est positionnée entre ledit ressort (36) et ledit boîtier extérieur (24), et ladite coupelle d'appui de ressort (38) fournissant un arrêt pour ledit élément de filtre (26) lorsqu'il se trouve dans ladite position de dérivation.

6. Système hydraulique comprenant :
l'ensemble filtre de fluide (22) selon une quelconque revendication précédente, une source (42) de fluide hydraulique communiquant dans une entrée de l'ensemble filtre (22), et un composant (46) relié à une sortie dudit ensemble filtre de fluide (22).

7. Système hydraulique selon la revendication 6, dans lequel ledit composant est une pompe (46).
